# EUROPÄISCHE PATENTSCHRIFT

(11) **EP 0 620 362 B1**
(45) Veröffentlichungstag und Bekanntmachung des Hinweises auf die Patenterteilung: **10.02.1999**
(21) Anmeldenummer: 94103650.1
(22) Anmeldetag: 10.03.1994
(51) Int. Cl.: F02C 6/00, F23R 3/28

(54) **Gasturbogruppe**
Gasturbine
Turbine à gaz

(30) Priorität: 08.04.1993 CH 1079/93
(43) Veröffentlichungstag der Anmeldung: 19.10.1994
(73) Patentinhaber: ASEA BROWN BOVERI AG, 5400 Baden (CH)
(72) Erfinder: Althaus, Rolf, Dr., CH-9230 Flawil (CH); Farkas, Franz, CH-8003 Zürich (CH); Graf, Peter, CH-79761 Waldshut-Tiengen 2 (DE); Hausermann, Fredy, CH-5415 Rieden bei Nussbaumen (CH); Kreis, Erhard, CH-8112 Otelfingen (CH)

(56) Entgegenhaltungen:
- EP-A- 0 321 809
- WO-A-80/01591
- CH-A- 211 540
- CH-A- 230 961
- CH-A- 273 506
- CH-A- 589 791
- DE-A- 2 702 440
- DE-A- 3 500 447
- DE-B- 1 074 326
- FR-A- 1 006 682
- FR-A- 2 392 231
- US-A- 2 468 461
- US-A- 3 315 467

## Beschreibung

### Technisches Gebiet

Die vorliegende Erfindung betrifft eine Gasturbogruppe gemäss Oberbegriff des Anspruchs 1. Sie betrifft auch ein Verfahren zum Betreiben einer solchen Gasturbogruppe.

### Stand der Technik

Eine Gasturbogruppe, welche im wesentlichen aus einer Verdichtergruppe, aus einer ersten, stromab der Verdichtergruppe und stromauf einer ersten Turbine gelegenen Brennkammer sowie aus einer zweiten, stromab der ersten Turbine und stromauf einer zweiten Turbine wirkenden Brennkammer besteht, geht beispielsweise aus DE-OS-27 02 440 hervor. Bei dieser Gasturbogruppe sowie bei den bisherig bekanntgewordenen Anlagen ähnlicher Konstellation sind die Brennkammern jeweils als Silobrennkammer ausgebildet. Dabei werden die Verbindungen einer Brennkammer zu den stromauf und stromab gelegenen Strömungsmaschinen, wie die genannte Druckschrift zeigt und beschreibt, anhand von Leitungen hergestellt, bisweilen anhand von Zu- und Abströmungskanälen, welche aus strömungstechnischen und thermischen Aspekten konstruktiv schwer zu handhaben sind. Abgesehen davon, dass die genannten Silobrennkammern, welche sich im allgemeinen rechtwinklig gegenüber der Rotorwelle erheben, die Gebäudengrössen ursächlich beeinflussen, löst der axiale Platzbedarf für die Zu- und Abströmungskanäle zwangsläufig eine Verlängerung der Rotorwelle aus, dergestalt, dass die Strömungsmaschinen dann aus statischen und dynamischen Ueberlegungen auf mindestens drei Lagern gelagert werden müssen, die Rotorwelle durch Kupplungen zwischen den einzelnen Strömungsmaschinen aufgeteilt ist, oder die Strömungsmaschinen mehrwellig miteinander in wirkverbindung stehen. Insbesondere bei Jet-Gasturbogruppen, wie dies beispielsweise aus DE-OS-34 47 717 hervorgeht, ist man dazu übergegangen, die einzige Brennkammer zwischen Verdichter und Turbine als sogenannte Ringbrennkammer auszubilden, was an sich eine kompaktere Aussenhülle der ganzen Turbogruppe ermöglicht. Soweit diese Technik aber auf Kraftwerksanlagen übertragen wird, entstehen bezüglich statischer und dynamischer Imponderabilien die gleichen, oben erwähnten Probleme.

Aus CH-A-211 540 ist eine Gasturbinenanlage bekanntgeworden, bei welcher eine isobare Verbrennung über mehrere Turbinen- und Brennkammerstufen durchgeführt wird, wobei bei dieser Schaltung die Brennstoffzuführung zwischen den Turbinenschaufeln vorgenommen wird. Die Gasturbinenanlage ist von der Art einer mehrwelligen Ausführung, mit einer separaten Niederdruckturbine. Bei dieser Gasturbinenanlage ist es ferner so, dass sowohl die erste als auch die zweite Brennkammer mit gleichen Brennern resp. Zerstäubern betrieben werden, d.h., die beiden Brennkammern sind individuell für sich betrachtet auf Diffusionsverbrennung aufgebaut. Somit ist ausgemacht, dass zwischen den beiden Brennkammern keinen interdependenten Verbrennungsvorgang vorliegt; beide Brennkammern weisen nämlich eine autonome Verbrennung auf, die im Einklang mit dem finalen Zweck dieser Gasturbinenanlage steht, nämlich eine isobare Verbrennung vorzuschlagen.

### Darstellung der Erfindung

Hier will die Erfindung Abhilfe schaffen. Der Erfindung, wie sie in den Ansprüchen gekennzeichnet ist, liegt die Aufgabe zugrunde, bei einer Gasturbogruppe und einem Verfahren zum Betrieb dieser Gasturbogruppe der eingangs genannten Art eine Konfiguration vorzuschlagen, bei welcher sämtliche rotierenden Aggregate der Strömungsmaschinen Bestandteile einer einzigen Rotorwelle sind, bei welcher die Brennkammern bei minimierter axialer und radialer Ausdehnung um die genannte Rotorwelle disponiert sind, und bei welcher die zweite Brennkammer verbrennungstechnisch mit den stromauf wirkenden Brennkammer und Turbine in einer Interdependenz steht.

Die wesentlichen Vorteile der Erfindung sind darin zu sehen, dass damit eine wesentliche höhere spezifische Leistung und ein höherer Wirkungsgrad erzielt werden.

Ein weiterer wesentlicher Vorteil der Erfindung ist darin zu sehen, dass der Wirkungsgrad im Teillastbetrieb der Anlage höher ausfällt.

Ein weiterer wesentlicher Vorteil der Erfindung betrifft die räumliche Ausdehnung der Maschine, welche durch ihre Kompaktheit besticht.

Des weiteren weist die Erfindung den Vorteil auf, dass eine Erschliessung eines weiteren Entwicklungspotentials für Gasturbinen und Kombianlagen (Gas- und Dampfturbinen-Anlagen) durch erhöhte Austrittstemperaturen möglich wird.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt einen Querschnitt durch eine Gasturbogruppe.

### Wege zur Ausführung der Erfindung, gewerbliche Anwendbarkeit

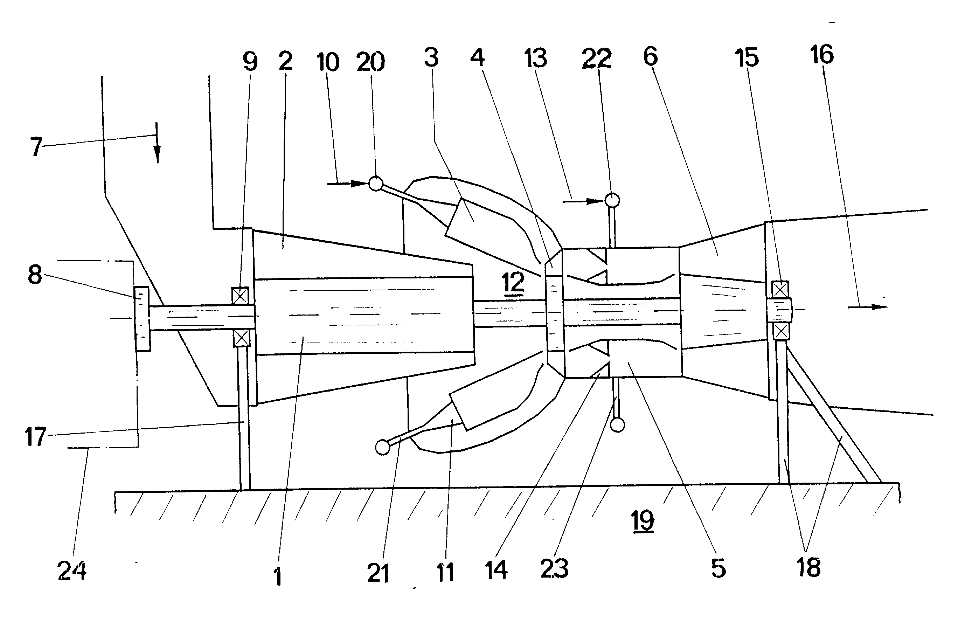

Die Fig. 1 zeigt eine Gasturbogruppe. Die nicht ersichtliche Bereitstellung des zum Betrieb der verschiedenen Brennkammern oder Wärmeerzeuger notwendigen Brennstoffes kann beispielsweise durch eine mit der Gasturbogruppe zusammenwirkende Kohlevergasung bewerkstelligt werden. Selbstverständlich ist es auch möglich, den zum Einsatz gelangenden Brennstoff aus einem Primärnetz zu beziehen. Wird die Versorgung eines gasförmigen Brennstoffes zum Betrieb der Gasturbogruppe über eine Pipeline bereitgestellt, so kann das Potential aus der Druck- und/oder Temperaturdifferenz zwischen Primärnetz und Verbrauchernetz für die Belange der Gasturbogruppe, oder allgemein der Schaltung, rekuperiert werden. Die vorliegende Gasturbogruppe kann ohne weiteres mit einem nachgeschalteten, nicht ersichtlichen Dampfkreislauf zu einer sogenannte Kombianlage erweitert werden. Die Gasturbogruppe als autonome Einheit besteht aus einem Verdichter 2, einer dem Verdichter nachgeschalteten ersten Brennkammer 3, einer dieser Brennkammer 3 nachgeschalteten ersten Turbine 4, einer dieser Turbine 4 nachgeschalteten zweiten Brennkammer 5 und einer dieser Brennkammer 5 nachgeschalteten zweiten Turbine 6. Die genannten Strömungsmaschinen 2, 4, 6 weisen eine einheitliche Rotorwelle 1 auf. Diese Rotorwelle 1 selbst ist auf zwei Lagern 9, 15 gelagert, welche kopfseitig des Verdichters 2 und stromab der zweite Turbine 6 plaziert sind. Die Lager 9, 15 fussen auf im Fundament 19 eingebundenen Ankern 17, 18. Die Verdichterstufe kann je nach Betreibungsauslegung, beispielsweise um die spezifische Leistung zu erhöhen, in zwei nicht gezeigte Teilverdichter unterteilt werden. Bei einer solchen Konstellation wird dann stromab des ersten Verdichters und stromauf des zweiten Verdichters ein Zwischenkühler geschaltet, in welchem die teilverdichtete Luft zwischengekühlt wird. Die in diesem ebenfalls nicht gezeigten Zwischenkühler aus der vorgenannten Zwischenkühlung anfallende Wärme wird optimal, also nutzbringend, in den Prozess der jeweiligen Kraftwerksanlage rückgeführt. Die angesaugte Luft 7 strömt nach deren Verdichtung in ein Gehäuse 12, das in sich den Verdichteraustritt und die erste Turbine 4 einschliesst. Im Gehäuse 12 ist die erste Brennkammer 3 unterbracht, welche als zusammenhängende Ringbrennkammer ausgebildet ist. Selbsverständlich kann die verdichtete Luft zur ersten Brennkammer 3 aus einer nicht gezeigten Luftspeicheranlage beigestellt werden. Die Ringbrennkammer 3 weist kopfseitig, auf den Umfang verteilt, eine Anzahl von Brennern 11 auf, welche die Heissgaserzeugung aufrechterhalten. An sich können hier Diffusionsbrenner zum Einsatz gelangen. Im Sinne einer Reduzierung der Schadstoff-Emissionen aus dieser Verbrennung, insbesondere was die NOx-Emissionen betrifft, ist es vorteilhaft, eine Anordnung von Vormischbrennern gemäss EP-PS-0 321 809 vorzusehen, wobei der Erfindungsgegenstand aus der genannten Druckschrift integrierender Bestandteil dieser Beschreibung ist, darüber hinaus auch die dort beschriebene Art der Brennstoffzuführung, die in der vorliegenden Figur mit den anhand einer Ringleitung 20 miteinander verbundenen Brennstoff lanzen 21 versinnbildlicht wird. Was die Anordnung der Vormischbrenner in Umfangsrichtung der Ringbrennkammer 3 anbelangt, so kann eine solche bei Bedarf von der üblichen Konfiguration gleicher Brenner abweichen, und stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration disponiert ist. Die grossen Vormischbrenner, welche die Funktion von Hauptbrennern zu erfüllen haben, stehen zu den kleinen Vormischbrennern, welche die Pilotbrenner dieser Brennkammer sind, bezüglich der sie durchströmenden Brennerluft, also der verdichteten Luft aus dem Verdichter 2, in einem Grössenverhältnis, das fallweise festgelegt wird. Im gesamten Lastbereich der Brennkammer arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 3 sehr nahe an die Wirbelzentren der Pilotbrenner heran, so dass eine Zündung an sich nur mit diesen Pilotbrennern möglich ist. Beim Hochfahren wird die Brennstoffmenge, die über die Pilotbrenner zugeführt wird, soweit gesteigert, bis die Pilotbrenner angesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll angesteuert. Weil die durch die Pilotbrenner initierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 3 aus einer Anzahl einzelner rohrförmiger Brennräume bestehen, welche ebenfalls schrägringförmig, bisweilen auch schraubenförmig, um die Rotorachse angeordnet sind. Diese Ringbrennkammer 3, unabhängig von ihrer Auslegung, wird und kann geometrisch so angeordnet werden, dass sie auf die Rotorlänge praktisch keinen Einfluss ausübt. Auf die daraus resultierenden Vorteile aus einer solchen Disposition, die recht gut aus der Figur hervorgeht, wird weiter unten näher eingegangen. Die Heissgasen aus dieser Ringbrennkammer 3 beaufschlagen die unmittelbar nachgeschaltete erste Turbine 4, deren kalorisch entspannende Wirkung auf die Heissgase bewusst minimal gehalten wird, d.h. diese Turbine 4 wird demnach aus nicht mehr als zwei Laufschaufelreihen bestehen. Bei einer solchen Turbine 4 wird nötig sein, einen Druckausgleich an den Stirnflächen zwecks Stabilisierung des Axialschubes vorzusehen. Die in Turbine 4 teilentspannten Heissgase, welche unmittelbar in die zweite Brennkammer 5 strömen, weisen aus dargelegten Gründen eine recht hohe Temperatur auf, vorzugsweise ist sie betreibungsspezifisch so auszulegen, dass sie sicher noch um 1000°C beträgt. Diese zweite Brennkammer 5 hat im wesentlichen die Form eines zusammenhängenden ringförmigen axialen oder quasi-axialen Zylinders. Diese Brennkammer 5 kann selbstverständlich auch aus einer Anzahl axial, quasi-axial oder schraubenförmig angeordneten und in sich abgeschlossenen Brennräumen bestehen. Was die Konfiguration der ringförmigen, aus einem einzigen Brennraum bestehenden Brennkammer 5 betrifft, so sind in Umfangsrichtung dieses ringförmigen Zylinders mehrere Brennstofflanzen 23 disponiert, welche über eine Ringleitung 22 miteinander verbunden sind. Diese Brennkammer 5 weist keinen Brenner auf: Die Verbrennung des in die aus der Turbine 4 kommenden Abgase eingedüsten Brennstoffes 13 geschieht hier durch Selbstzündung, soweit freilich das Temperaturniveau eine solche Betreibungsart zulässt. Ausgehend davon, dass die Brennkammer 5 mit einem gasförmigen Brennstoff, also beispielsweise Erdgas, betrieben wird, muss für eine Selbstzündung eine Temperatur der Abgase aus der Turbine 4 um die 1000°C vorliegen. Demnach, um Selbstzündung eines Erdgases in der Brennkammer 5 sicherzustellen, muss die Austrittstemperatur der Gase aus der Turbine 4 noch sehr hoch sein, wie oben dargelegt um die 1000°C, und dies selbstverständlich auch bei Teillastbetrieb, was auf die Auslegung dieser Turbine 3 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 5, vorzugsweise an der Innen- und Aussenwand in Umfangsrichtung disponiert, eine Reihe von Elementen 14 vorgesehen, welche in axialer Richtung vorzugsweise stromauf der Brennstofflanzen 23 plaziert sind. Die Aufgabe dieser Elemente 14 besteht darin, Wirbel zu erzeugen, welche eine Rückströmzone, analog derjenige in den Vormischbrennern 11, induzieren. Da es sich bei dieser Brennkammer 5, aufgrund der axialen Anordnung und der Baulänge, um eine Hochgeschwindigkeitsbrennkammer handelt, deren mittlere Geschwindigkeit grösser ca. 60 m/s ist, müssen die wirbelerzeugenden Elemente 14 strömungskonform ausgebildet werden. Anströmungsseitig sollen diese vorzugsweise aus einer tetraederförmigen Form mit anströmungsschiefen Flächen bestehen. Die wirbelerzeugenden Elemente 14 können entweder an der Aussenfläche oder an der Innenfläche der Brennkammer 5 plaziert sein, oder, wie die Figur zeigt, beiderorts wirken. Am dargestellten Beispiel aus der Figur ist des weiteren ersichtlich, dass die schiefen Flächen zwischen den aussenliegenden und innenliegenden wirbelerzeugenden Elemente 14 vorzugsweise spiegelbildlich angeordnet sind, dergestalt, dass der Durchflussquerschnitt der Brennkammer 5 stromab dieses Ortes im Bereich der Eindüsung des Brennstoffes 13 eine wirbelerzeugende Erweiterung erfährt. Selbstverständlich können die wirbelerzeugenden Elemente 14 auch axial zueinander verschoben sein. Die abströmungsseitige Fläche der wirbelerzeugenden Elemente 14 ist im wesentlichen radial ausgebildet, so dass sich ab dort eine Rückströmzone einstellt. Die Selbstzündung in der Brennkammer 5 muss indessen auch in den transienten Lastbereichen sowie im Teillastbereich der Gasturbogruppe gesichert bleiben, d.h. es müssen Hilfsvorkehrungen vorgesehen werden, welche die Selbstzündung in der Brennkammer 5 auch dann sicherstellen, wenn sich eine Flexion der Temperatur der Gase im Bereich der Eindüsung des Brennstoffes 13 einstellen sollte. Um eine sichere Selbstzündung des in die Brennkammer 5 eingedüsten gasförmigen Brennstoffes 13 zu gewährleisten, wird diesem Brennstoff eine kleine Menge eines anderen Brennstoffes mit einer niedrigeren Zündtemperatur beigegeben. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und ermöglicht auch dann eine Selbstzündung in der Brennkammer 5, wenn die Abgase aus der ersten Turbine 4 eine Temperatur unterhalb des angestrebten optimalen Niveaus von 1000°C aufweisen sollten. Diese Vorkehrung , Brennöl zur Sicherstellung einer Selbstzündung vorzusehen, erweist sich freilich immer dann als besonders angebracht, wenn die Gasturbogruppe mit reduzierter Last betrieben wird. Diese Vorkehrung trägt des weiteren entscheidend dazu bei, dass die Brennkammer 5 eine minimale axiale Ausdehnung aufweisen kann. Die kurze Baulänge der Brennkammer 5, die Wirkung der wirbelerzeugenden Elemente 14 zur Flammenstabilisierung sowie die fortwährende Sicherstellung der Selbstzündung sind ursächlich dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich auf eine optimierte Kühlung der Strukturen dieser Brennkammer 5 niederschlägt. Die in der Brennkammer 5 aufbereiteten Heissgase beaufschlagen anschliessend eine nachgeschaltete zweite Turbine 6. Die thermodynamischen Kennwerte der Gasturbogruppe können so ausgelegt werden, dass die Abgase 16 aus der zweiten Turbine 6 noch soviel kalorisches Potential aufweisen, um damit einen nicht dargestellten Dampfkreislauf optimal zu betreiben, womit die Anlage dann eine Kombianlage wäre. Wie bereits bei der Beschreibung der Ringbrennkammer 3 hingewiesen wurde, ist diese geometrisch so angeordnet, dass sie auf die Rotorlänge praktisch keinen Einfluss ausübt. Des weiteren konnte festgestellt werden, dass die zweite zwischen Abströmungsebene der ersten Turbine 4 und Anströmungsebene der zweiten Turbine 6 verlaufende Brennkammer 5 eine minimale Länge aufweist. Da ferner die Entspannung der Heissgase in der ersten Turbine 4, aus dargelegten Gründen, über wenige Laufschaufelreihen geschieht, lässt sich eine Gasturbogruppe bereitstellen, deren Rotorwelle 1 aufgrund ihrer minimierten Länge bloss auf zwei Lagern 9, 15 abstützbar ist. Demnach sind dieser Lager 9, 15 einerseits stromauf der ersten Strömungsmaschine, also hier des Verdichters 2, und andererseits stromab der letzten Strömungsmaschine, also hier der zweiten Turbine 6, plaziert, womit die Rotorwelle 1 im Bereich der restlichen Aggregate der Gasturbogruppe keiner weiteren Lagerung mehr bedarf. Verdichterseitig weist die Rotorwelle 1 eine Kupplung 8 auf, welche der Leistungsabgabe dient; normalerweise handelt es sich hier um einen Generator 24, der in der Figur nur andeutungsweise gezeigt ist. Es ist zur Steigerung des Wirkungsgrades der Gasturbogruppe von Vorteil, wenn vor der zweiten Brennkammer 5 ein in der Figur nicht ersichtlicher Kleindiffusor vorgesehen wird. Damit liesse sich der Totaldruckverlust im Gesamtsystem vermindern. Es lässt sich anhand der üblichen Diffusorauslegungsdiagramme beweisen, dass sich bereits bei einer minimalen Länge des Diffusors grosse Rückgewinnungsraten des dynamisches Druckes erreichen lassen. Wie oben dargelegt, können die Verdichterstufen mit einer Zwischenkühlung ausgestattet sein. Um bei der Zugrundelegung einer Zwischenkühlung die geometrische Grundkonzeption der Gasturbogruppe, wie sie aus der Figur dargelegt wird, nicht zu alterieren, wird vorgeschlagen, einen in der Figur nicht ersichtlichen Zwischenkühler vorzusehen, der innerhalb des Statorgehäuses und in unmittelbarer Strömungsrichtung der Verdichterstufen plaziert ist. Die Kühlung bei diesem Zwischenkühler geschieht mittelbar oder unmittelbar. Bei unmittelbarer Zwischenkühlung soll dies vorzugsweise durch ein Aggregat geschehen, dessen Betrieb auf Verdunstung des eingedüsten Wassers ausgelegt ist. Somit ergibt sich die Konfiguration, dass übliche Verbindungsleitungen zu einem ausserhalb des Statorgehäuses plazierten Zwischenkühler, und von diesem Zwischenkühler zurück durch das Statorgehäuse zur nächsten Verdichterstufe völlig entfallen. Eine Möglichkeit eines auf Verdunstung ausgelegten Zwischenkühlers besteht darin, dieselbe geometrische Form vorzusehen, wie sie beim bereits genannten Brenner 11 vorgegeben ist. Bei einem solchen Einsatz besteht die Möglichkeit, die Einbringung der benötigten Wassermenge in den Innenraum des Zwischenkühlers nicht nur durch die kopfseitige Düse vorzusehen, sondern auch, allenfalls, nur über die entlang der tangentialen Eintrittsschlitze vorhandenen Düsen dieses nun zu einem Zwischenkühler umgewandelten Brenners zu bewerkstelligen. Bei einer Aufteilung der Verdichterstufe, zum Beispiel zwecks Integration einer Zwischenkühlung, kann das kompressorseitige Lager, soweit statische und/oder dynamische Berechnungen dies verlangen, zwischen den beiden Teilverdichtern angeordnet werden.

### Bezeichnungsliste

- 1: Rotorwelle
- 2: Verdichter
- 3: Brennkammer
- 4: Turbine
- 5: Brennkammer
- 6: Turbine
- 7: Ansaugluft
- 8: Kupplung zur Leistungsabgabe
- 9: Lager
- 10: Brennstoff
- 11: Brenner
- 12: Brennkammer-Gehäuse
- 13: Brennstoff
- 14: Wirbelerzeuger
- 15: Lager
- 16: Abgase
- 17: Eingebundener Anker
- 18: Eingebundener Anker
- 19: Fundament
- 20: Ringleitung
- 21: Brennstofflanze
- 22: Ringleitung
- 23: Brennstofflanze
- 24: Generator

## Patentansprüche

1. Gasturbogruppe, im wesentlichen bestehend aus einer aus mindestens einem Verdichter bestehenden Verdichtereinheit (2), aus einer stromab der Verdichtereinheit wirkenden ersten Brennkammer (3), aus einer stromab der ersten Brennkammer wirkenden ersten Turbine (4), aus einer stromab der ersten Turbine wirkenden zweiten Brennkammer (5), aus einer stromab der zweiten Brennkammer wirkenden zweiten Turbine (6), wobei die erste und die zweite Brennkammer eine ringförmige Konfiguration aufweisen, dadurch gekennzeichnet, dass die zweite Brennkammer (5) als selbstzündende mit wirbelerzeugenden Elementen (14) bestückte Brennkammer ausgebildet ist.

2. Gasturbogruppe nach Anspruch 1, dadurch gekennzeichnet, dass die Verdichtereinheit (2) zwei Verdichter umfasst, die in Wirkverbindung mit einem Zwischenkühler stehen.

3. Gasturbogruppe nach Anspruch 1, dadurch gekennzeichnet, dass stromauf der zweiten Brennkammer (5) ein Diffusor angeordnet ist.

4. Gasturbogruppe nach Anspruch 1, dadurch gekennzeichnet, dass die abströmungsseitigen Flächen der wirbelerzeugenden Elemente (14) im Durchflussquerschnitt der zweiten Brennkammer (5) einen Querschnittssprung bilden.

5. Gasturbogruppe nach den Ansprüchen 1, dadurch gekennzeichnet, dass stromab der wirbelerzeugenden Elemente (14) ein Hauptbrennstoff (13) in die zweite Brennkammer (5) eindüsbar ist.

6. Gasturbogruppe nach Anspruch 5, dadurch gekennzeichnet, dass der Hauptbrennstoff (13) über eine Anzahl Brennstofflanzen (23) einbringbar ist, und dass die Brennstofflanzen (23) in Umfangsrichtung der zweiten Brennkammer (5) angeordnet sind.

7. Gasturbogruppe nach Anspruch 1, dadurch gekennzeichnet, dass die erste Brennkammer (3) mit einer Anzahl Vormischbrenner (14) betreibbar ist.

8. Gasturbogruppe nach Anspruch 1, dadurch gekennzeichnet, dass die Strömungsmaschinen (2, 4, 6) auf einer gemeinsamen Rotorwelle (1) angeordnet sind.

9. Gasturbogruppe nach Anspruch 8, dadurch gekennzeichnet, dass die Rotorwelle (1) auf zwei Lagern (9, 15) gelagert ist.

10. Gasturbogruppe nach den Ansprüchen 1 und 8, dadurch gekennzeichnet, dass die erste und/oder zweite Brennkammer (3, 5) aus einer Anzahl einzelner rohrförmiger um die Rotorwelle (1) angeordneter Brennräume bestehen.

11. Verfahren zum Betrieb einer Gasturbogruppe nach Anspruch 1, wobei die Entspannung von Heissgasen (4) in der ersten Turbine (4) so minimiert wird, dass diese teilentspannten Heissgase in die nachgeordnete stromauf der zweiten Turbine (6) wirkende zweite Brennkammer (5) mit einer Temperatur einströmen, die oberhalb der Selbstzündungstemperatur eines dort eingedüsten Hauptbrennstoffes (13) liegt, und wobei die Heissgase in der zweiten Brennkammer (5) verwirbelt werden.

12. Verfahren nach Anspruch 11, dadurch gekennzeichnet, dass die teilentspannten Heissgase in der zweiten Brennkammer (5) eine mittlere Geschwindigkeit > 60 m/s aufweisen.

13. Verfahren nach Anspruch 11, dadurch gekennzeichnet, dass Hilfsvorkehrungen vorgesehen werden, welche die Selbstzündung in der zweiten Brennkammer (5) auch dann sicherstellen, wenn sich eine Flexion der Temperatur der Gase im Bereich der Eindüsung des Brennstoffes einstellen sollte.

14. Verfahren nach Anspruch 11, dadurch gekennzeichnet, dass abströmende Abgase aus der zweiten Turbine (6) einen Abhitzedampferzeuger durchströmen, und dass ein im Abhitzedampferzeuger produzierter Dampf mindestens eine mit der Gasturbogruppe in Wirkverbindung stehende Dampfturbine beaufschlagt.

## Claims

1. Gas turbine group, consisting essentially of a compressor unit (2) consisting of at least one compressor, a first combustion chamber (3) acting downstream of the compressor unit, a first turbine (4) acting downstream of the first combustion chamber, a second combustion chamber (5) acting downstream of the first turbine and a second turbine (6) acting downstream of the second combustion chamber, the first and the second combustion chambers having an annular configuration, characterized in that the second combustion chamber (5) is designed as a self-igniting combustion chamber equipped with vortex-generating elements (14).

2. Gas turbine group, according to Claim 1, characterized in that the compressor unit (2) comprises two compressors which are operationally connected to an intercooler.

3. Gas turbine group according to Claim 1, characterized in that a diffuser is arranged upstream of the second combustion chamber (5).

4. Gas turbine group according to Claim 1, characterized in that the downstream-end surfaces of the vortex-generating elements (14) form a cross-sectional discontinuity in the flow cross-section of the second combustion chamber (5).

5. Gas turbine group according to Claims [sic] 1, characterized in that it is possible downstream of the vortex-generating elements (14) to spray a main fuel (13) into the second combustion chamber (5).

6. Gas turbine group according to Claim 5, characterized in that the main fuel (13) can be introduced via a number of fuel lances (23), and in that the fuel lances (23) are arranged in the circumferential direction of the second combustion chamber (5).

7. Gas turbine group according to Claim 1, characterized in that the first combustion chamber (3) can be operated with a number of premixing burners (11).

8. Gas turbine group according to Claim 1, characterized in that the turbomachines (2, 4, 6) are arranged on a common rotor shaft (1).

9. Gas turbine group according to Claim 8, characterized in that the rotor shaft (1) is supported on two bearings (9, 15).

10. Gas turbine group according to Claims 1 and 8, characterized in that the first and/or second combustion chambers (3, 5) comprise a number of individual tubular combustion spaces arranged around the rotor axis (1).

11. Method for operating a gas turbine group according to Claim 1, in which the expansion of hot gases (4) in the first turbine (4) is minimized such that these partially expanded hot gases flow into the downstream second combustion chamber (5) acting upstream of the second turbine (6), with a temperature which is above the self-ignition temperature of a main fuel (13) sprayed in there, and in which the hot gases are turbulently mixed in the second combustion chamber (5).

12. Method according to Claim 11, characterized in that the partially expanded hot gases in the second combustion chamber (5) have an average porosity > 60 m/s.

13. Method according to Claim 11, characterized in that aids are provided which ensure the self-ignition in the second combustion chamber (5) even if there should be a fluctuation of the temperature of the gases in the region where the fuel is sprayed in.

14. Method according to Claim 11, characterized in that exhaust gases escaping from the second turbine (6) flow through a waste-heat steam generator, and in that steam produced in the waste-heat steam generator acts on at least one steam turbine operationally connected to the gas turbine group.

## Revendications

1. Turbine à gaz, se composant essentiellement d'une unité de compresseur (2) composée d'au moins un compresseur, d'une première chambre de combustion (3) opérant en aval de l'unité de compresseur, d'une première turbine (4) opérant en aval de la première chambre de combustion, d'une seconde chambre de combustion (5) opérant en aval de la première turbine, d'une seconde turbine (6) opérant en aval de la seconde chambre de combustion, dans laquelle la première et la seconde chambre de combustion présentent une configuration annulaire, caractérisée en ce que la seconde chambre de combustion (5) est constituée par une chambre de combustion à auto-allumage garnie d'éléments générateurs de tourbillons (14).

2. Turbine à gaz suivant la revendication 1, caractérisée en ce que l'unité de compresseur (2) comprend deux compresseurs, qui sont en relation active avec un refroidisseur intermédiaire.

3. Turbine à gaz suivant la revendication 1, caractérisée en ce qu'un diffuseur est disposé en amont de la seconde chambre de combustion (5).

4. Turbine à gaz suivant la revendication 1, caractérisée en ce que les faces des éléments générateurs de tourbillons (14), situées du côté du courant d'aval, forment un saut de section transversale dans la section transversale de passage de la seconde chambre de combustion (5).

5. Turbine à gaz suivant la revendication 1, caractérisée en ce qu'un combustible principal (13) peut être injecté dans la seconde chambre de combustion (5), en aval des éléments générateurs de tourbillons (14).

6. Turbine à gaz suivant la revendication 5, caractérisée en ce que le combustible principal (13) peut être introduit par plusieurs lances à combustible (23), et en ce que les lances à combustible (23) sont disposées dans la direction périphérique de la seconde chambre de combustion (5).

7. Turbine à gaz suivant la revendication 1, caractérisée en ce que la première chambre de combustion (3) peut fonctionner avec plusieurs brûleurs à prémélange (11).

8. Turbine à gaz suivant la revendication 1, caractérisée en ce que les turbomachines (2, 4, 6) sont disposées sur un arbre de rotor (1) commun.

9. Turbine à gaz suivant la revendication 8, caractérisée en ce que l'arbre de rotor (1) est supporté sur deux paliers (9, 15).

10. Turbine à gaz suivant les revendications 1 et 8, caractérisée en ce que la première et/ou la seconde chambre de combustion (3, 5) se compose(nt) d'un certain nombre d'espaces de combustion tubulaires individuels disposés autour de l'arbre de rotor (1).

11. Procédé pour la conduite d'une turbine à gaz suivant la revendication 1, dans lequel la détente de gaz chauds (4) dans la première turbine (4) est minimisée d'une façon telle que ces gaz chauds partiellement détendus pénètrent dans la seconde chambre de combustion (5) disposée à la suite et opérant en amont de la seconde turbine (6) avec une température, qui est située au-dessus de la température d'auto-allumage d'un combustible principal (13) qui y est injecté, et dans lequel les gaz chauds sont mis en tourbillons dans la seconde chambre de combustion (5).

12. Procédé suivant la revendication 11, caractérisé en ce que les gaz chauds partiellement détendus présentent dans la seconde chambre de combustion (5) une vitesse moyenne > 60 m/s.

13. Procédé suivant la revendication 11, caractérisé en ce qu'il est prévu des dispositions auxiliaires, qui assurent l'auto-allumage dans la seconde chambre de combustion (5), même s'il devait se produire un fléchissement de la température des gaz dans la région de l'injection du combustible.

14. Procédé suivant la revendication 11, caractérisé en ce que des gaz d'échappement quittant la seconde turbine (6) traversent un générateur de vapeur à récupération, et en ce qu'une vapeur produite dans le générateur de vapeur à récupération frappe au moins une turbine à vapeur se trouvant en liaison active avec la turbine à gaz.
